# EUROPEAN PATENT APPLICATION

(11) **EP 3 035 157 A1**
(43) Date of publication of application: **22.06.2016**
(21) Application number: 14307039.9
(22) Date of filing: 15.12.2014
(51) Int. Cl.: G06F 3/01, G06F 3/0346, G06F 1/16

(54) **Method and processing equipment for activating a multi-user mode between mobile devices**

(71) Applicant: Thomson Licensing, 92130 Issy-les-Moulineaux (FR)
(72) Inventor: Morin, Thomas, 35576 Cesson-Sevigne (FR); Leroy, Bertrand, 35576 Cesson-Sevigne (FR); Gendron, David, 35576 Cesson-Sevigne (FR)
(74) Representative: Huchet, Anne

(57) **Abstract**

Processing equipment for activating a multi-user mode between mobile devices arranged within at least one network, said processing equipment comprising:
- an interface of communication (11) configured to receive multi-user mode notifications from at least a first and a further mobile devices connected to the processing equipment (E), each multi-user mode notification indicating that:
▪ the corresponding mobile device is motionless;
▪ a position of the corresponding mobile device;
▪ an orientation of the corresponding mobile device;

- a multi-user mode module (15) configured to activate a multi-user mode between at least the first and further mobile devices when:
▪ the positions of the first and further mobile devices meet a position criterion;
▪ the orientations of the first and further mobile devices meet an orientation criterion.

## Description

### TECHNICAL FIELD

The present disclosure generally relates to the exchange of data between mobiles devices, and in particular, is related to a method for activating a multi-user mode between such mobile devices.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

With the development of mobile multimedia devices (such as smartphones, tablets, smartwatches, etc.), a huge amount of data may be stored on such mobile devices. Users are more and more eager to share their own data with other persons and, in particular, when they are near to each other.

To this end, it is already known to pair mobile devices together through a peer to peer connection supported, for instance, by the Bluetooth protocol (a proprietary open wireless technology standard for exchanging data over short distances). Paired mobile devices - forming a personal area network - are able to share and exchange information between themselves. Such a direct pairing requires the use of PIN code: the users of each mobile device must enter a PIN code. The pairing is only successful if both mobile devices enter the same PIN code.

Nevertheless, PIN code errors commonly lead to unsuccessful pairing. In addition, such a direct pairing process is time consuming and appears not to be user friendly.

The present disclosure addresses at least some of the above mentioned drawbacks. An alternative way for exchanging information between mobile devices is needed.

### SUMMARY

To this end, the present disclosure concerns a method for activating a multi-user mode, at a processing equipment located in at least one network, between mobile devices arranged within said at least one network, in that it comprises, at the processing equipment:
- receiving, from a first mobile device connected to the processing equipment, a first multi-user mode notification indicating that:
   ▪ the first mobile device is motionless;
   ▪ a position of the first mobile device;
   ▪ an orientation of the first mobile device;
- receiving, from a further mobile device connected to the processing equipment, a further multi-user mode notification indicating that:
   ▪ the further mobile device is motionless;
   ▪ a position of the further mobile device;
   ▪ an orientation of the further mobile device;
- activating a multi-user mode, at the processing equipment, between at least the first and further mobile devices when:
   ▪ the positions of the first and further mobile devices meet a position criterion; and
   ▪ the orientations of the first and further mobile devices meet an orientation criterion.

In an embodiment of the present disclosure, the reception of the first multi-user mode notification can trigger a timer at the processing equipment, so that the multi-user mode between the first and further mobile devices is activated when the further multi-user mode notification is received before the end of a time period associated with said timer.

In an embodiment of the present disclosure, the position criterion can be met when a difference between the position of the first mobile device with the position of the further mobile device is equal or lower than a position threshold.

In an embodiment of the present disclosure, the orientation criterion can be met when a difference between the orientation of the first mobile device with the orientation of the further mobile device is equal or lower than an orientation threshold.

In an embodiment of the present disclosure, said method can further comprise:
- sending of acknowledgment notifications to the first and further mobile devices once the multi-user mode is activated between said mobile devices.

In addition, the acknowledgment notifications can comprise an identifier of each mobile device for which the multi-user mode is activated.

The present disclosure also concerns a processing equipment for activating a multi-user mode between mobile devices arranged within at least one network. Said processing equipment comprises:
- an interface of communication configured to receive multi-user mode notifications from at least a first and a further mobile devices connected to the processing equipment, each multi-user mode notification indicating that:
   ▪ the corresponding mobile device is motionless;
   ▪ a position of the corresponding mobile device;
   ▪ an orientation of the corresponding mobile device;
- a multi-user mode module configured to activate a multi-user mode between at least the first and further mobile devices when:
   ▪ the positions of the first and further mobile devices meet a position criterion;
   ▪ the orientations of the first and further mobile devices meet an orientation criterion.

In an embodiment of the present disclosure, the multi-user mode module can further comprise a timer which is triggered upon receipt of a first multi-user mode notification from the first mobile device,
so that the multi-user mode between the first and further mobile devices is activated when a further multi-user mode notification from said further mobile device is received before the end of a time period of associated with the timer.

In an embodiment of the present disclosure, the multi-user module can further comprise a position comparator configured to determine the difference between the position of the first mobile device with the position of the further mobile device and to compare the determined difference of positions with a position threshold,
so that the position criterion is met when the determined difference of positions is equal or lower than the position threshold.

In an embodiment of the present disclosure, the multi-user module can further comprise an orientation comparator configured to determine the difference between the orientation of the first mobile device with the orientation of the further mobile device and to compare the determined difference of orientations with an orientation threshold,
so that the orientation criterion is met when the determined difference of orientations is equal or lower than the orientation threshold.

In an embodiment of the present disclosure, the multi-user module can be further configured to send acknowledgment notifications to the first and further mobile devices once the multi-user mode is activated between said mobile devices.

Moreover, the acknowledgment notifications can comprise an identifier of each mobile device for which the multi-user mode is activated.

In an embodiment of the present disclosure, the processing equipment according may correspond to one of the mobile devices.

The present disclosure further concerns a processing equipment for activating a multi-user mode between mobile devices arranged within at least one network, said processing equipment comprising one or several processors configured to:
- receive, from a first mobile device connected to the processing equipment, a first multi-user mode notification indicating that:
   ▪ the first mobile device is motionless;
   ▪ a position of the first mobile device;
   ▪ an orientation of the first mobile device;
- receive, from a further mobile device connected to the processing equipment, a further multi-user mode notification indicating that:
   ▪ the further mobile device is motionless;
   ▪ a position of the further mobile device;
   ▪ an orientation of the further mobile device;
- activate a multi-user mode between at least the first and further mobile devices when:
   ▪ the positions of the first and further mobile devices meet a position criterion; and
   ▪ the orientations of the first and further mobile devices meet an orientation criterion.

The present disclosure also concerns a computer program product downloadable from a communication network and/or recorded on a medium readable by computer and/or executable by a processor, comprising program code instructions for implementing a method for activating a multi-user mode, at a processing equipment located in at least one network, between mobile devices arranged within said network,
said method comprising:
- receiving, from a first mobile device connected to the processing equipment, a first multi-user mode notification indicating that:
   ▪ the first mobile device is motionless;
   ▪ a position of the first mobile device;
   ▪ an orientation of the first mobile device;
- receiving, from a further mobile device connected to the processing equipment, a further multi-user mode notification indicating that:
   ▪ the further mobile device is motionless;
   ▪ a position of the further mobile device;
   ▪ an orientation of the further mobile device;
- activating a multi-user mode, at the processing equipment, between at least the first and further mobile devices when:
   ▪ the positions of the first and further mobile devices meet a position criterion; and
   ▪ the orientations of the first and further mobile devices meet an orientation criterion.

Besides, the present disclosure further concerns a non-transitory program storage terminal, readable by a computer, tangibly embodying a program of instructions executable by the computer to perform a method for activating a multi-user mode, at a processing equipment located in at least one network, between devices arranged within said network,
said method comprising:
- receiving, from a first mobile device connected to the processing equipment, a first multi-user mode notification indicating that:
   ▪ the first mobile device is motionless;
   ▪ a position of the first mobile device;
   ▪ an orientation of the first mobile device;
- receiving, from a further mobile device connected to the processing equipment, a further multi-user mode notification indicating that:
   ▪ the further mobile device is motionless;
   ▪ a position of the further mobile device;
   ▪ an orientation of the further mobile device;
- activating a multi-user mode, at the processing equipment, between at least the first and further mobile devices when:
   ▪ the positions of the first and further mobile devices meet a position criterion; and
   ▪ the orientations of the first and further mobile devices meet an orientation criterion.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF DRAWINGS

The disclosure will be better understood and illustrated by means of the following embodiment and execution examples, in no way limitative, with reference to the appended figures on which:
- Figure 1 is a schematic diagram of a network architecture wherein a method for activating a multi-user mode - according to the present disclosure - may be implemented;
- Figure 2 is a block diagram illustrating an example of a mobile device of the network architecture of Figure 1 according to the present disclosure;
- Figure 3 is a block diagram illustrating an example of a processing equipment - according to the present disclosure - configured to implement the method for activating a multi-user mode;
- Figure 4 is a flowchart depicting the method for activating a multi-user mode according to an embodiment of the present disclosure.

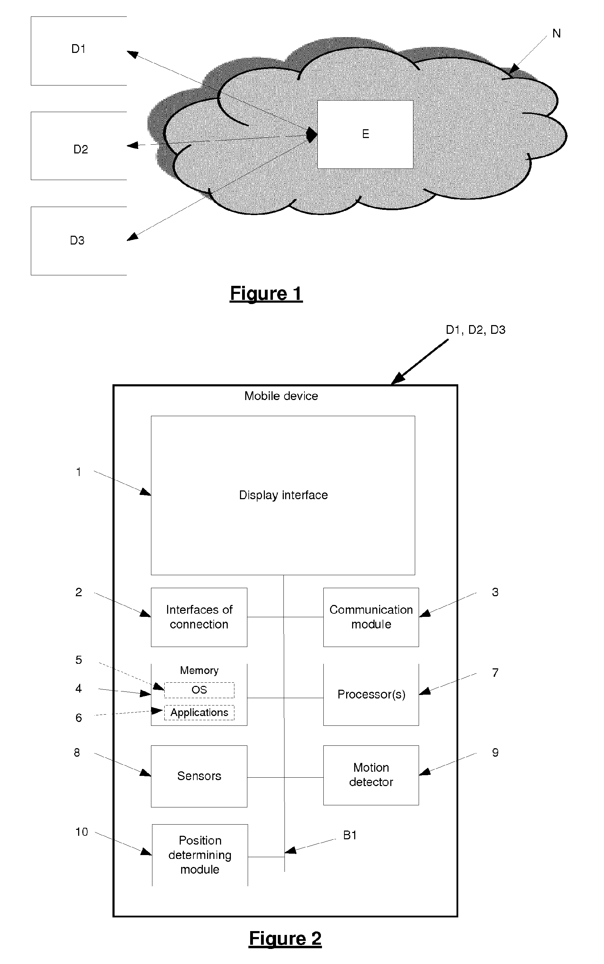

In Figures 1 to 4, some of the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION OF EMBODIMENTS

It is to be understood that the figures and descriptions of the present disclosure have been simplified to illustrate elements that are relevant for a clear understanding of the present disclosure, while eliminating, for purposes of clarity, many other elements found in typical digital terminals.

As described above, the present disclosure provides a method for activating a multi-user mode (also called N-user mode), at a processing equipment, between two or more devices connected to said processing equipment through a network architecture.

As depicted in Figure 1, the network architecture N is supported by one or several networks (such as a cellular access network (e.g. 3G and/or 4G), an ADSL access network, a WiFi network, an Ethernet network, etc.) and comprises several mobile devices D1, D2, D3 (only three mobile devices are illustrated in Figure 1). Naturally, additional mobile devices may be present in such a network architecture.

According to an embodiment of the present disclosure, as shown in Figure 2, each mobile device D1, D2, D3 (which may be, for instance, a smartphone, a tablet, a laptop, a personal digital assistant, a smartwatch, or the like) comprises:
- a display interface 1, which may be a touch-sensing interface (forming a touch screen) configured to receive input from user's touch. In such a case, the display interface 1 is configured to recognize a user's touches and, notably, the position of such touches. In operation, the touch screen 1 detects and reports the touches to processor(s) which then interprets said touches in accordance with its programming. The touch screen 1 can rely on different technologies, such as (without any limitation) capacitive sensing, resistive sensing, pressure sensing, optical sensing, and/or the like;
- one or more interfaces of connection 2 (wired and/or wireless, as for example Wi-Fi, Bluetooth, 3G/4G, Ethernet, etc.) to a Local Area Network (LAN) and/or Wide Area Network (WAN) as the Internet;
- a communication module 3 containing the protocol stacks to communicate with one or more other local or remote equipments (terminal, server, cache, etc.) belonging to the network architecture N. In particular, the communication module 3 comprises the TCP/IP stack well known in the art. Of course, it could be any other type of network and/or communicating means enabling the mobile device D1, D2, D3 to communicate with such other equipments;
- a memory 4, which is represented for clarity reasons in the form of a single block, but comprises at one and the same time random-access memory, read-only memory and reprogrammable persistent memory (of example "Flash" type);
- an operating system 5 (e.g. Apple IOS or Google Android) and applications 6, which are stored, for instance, in said memory 4. Naturally, they might be stored in another dedicated storing area different from the memory 4;
- one or more hardware processor(s) 7 (forming, for instance, a Central Processing Unit for controlling the operation of the mobile device and/or a Graphic Processing Unit) for executing the applications and programs stored in the memory 4 of the mobile device D1, D2, D3;
- several sensors 8 such as:
   ▪ an accelerometer to measure the force of acceleration of the mobile device, whether caused by gravity or by movement. It may also sense the angle at which the mobile device is being held;
   ▪ a gyroscope that enables 3-axis angular acceleration around the X, Y and Z axes, enabling precise calculation of yaw, pitch, and roll;
   ▪ a compass configured to measure a magnetic field, so as to determine a direction of the mobile device;
   ▪ a GPS (Global Positioning System) sensor to determine the position of the mobile device;
- an internal bus B1 to connect the various modules and all means well known to the skilled in the art for performing the generic device functionalities.

In addition, according to said embodiment, each mobile device D1, D2, D3 further comprises:
- a motion detector 9 which is configured to determine when the mobile device is motionless. In particular, the motion detector 9 may be connected to one or several sensors 8, for instance, through the internal bus B1. In particular, the motion detector 9 may determine that the mobile device is motionless when:
   ▪ the direction of the compass does not change; and/or
   ▪ the acceleration of the mobile device, provided by the accelerometer, is null;
- a position determining module 10 which is configured to provide the position of the mobile device D1, D2, D3. To this end, the module 10 may use different technologies (which may be combined together to improve accuracy):
   ▪ GPS: the GPS sensor received GPS information from satellites in order to transmit a position of the mobile device in space;
   ▪ WiFi networks Proximity: this technology analyzes the names and MAC addresses of the WiFi networks placed near the mobile device to find out the position of the latter, especially for indoor geolocation, where the GPS signal is weak or non-existent;
   ▪ Mobile repeater triangulation: this method is mostly used on mobile devices' browsers and relies on the relative distance to several cell phone towers;
   ▪ IP Address: this technology uses the IP address associated with a service provider (ISP).

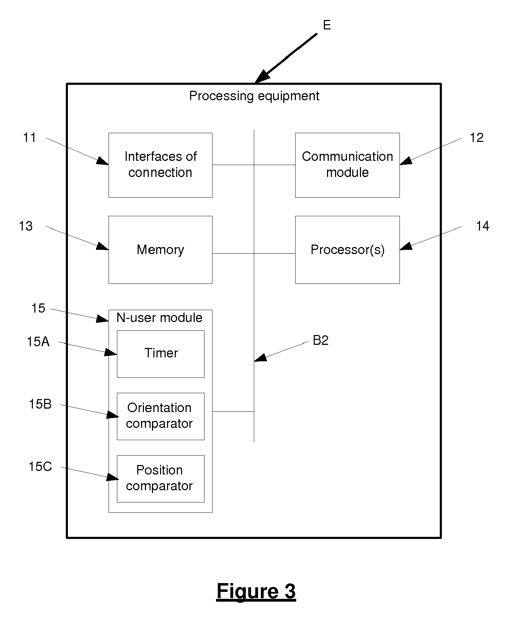

In addition, according to the embodiment, as shown in Figure 3, a processing equipment E - located within the network architecture N - comprises:
- one or more interfaces of connection 11 (wired and/or wireless, as for example Wi-Fi, Bluetooth, 3G/4G, Ethernet, etc.) to a Local Area Network (LAN) and/or Wide Area Network (WAN) as the Internet;
- a communication module 12 containing the protocol stacks to communicate with the mobile devices D1, D2 and D3 and other network equipment (such a as servers, caches, gateways, etc.) belonging to a local or wide area network. In particular, the communication module 12 comprises the TCP/IP stack well known in the art. Of course, it could be any other type of network and/or communicating means enabling the processing equipment E to communicate with the mobile devices and other network equipments;
- a memory 13 comprises at one and the same time random-access memory, read-only memory and reprogrammable persistent memory (of example "Flash" type);
- one or more hardware processor(s) 14 for executing programs stored in the memory 13;
- an internal bus B2 to connect the various modules and all means well known to the skilled in the art for performing the generic device functionalities;
- an N-user module 15 comprising
   ▪ a timer 15A which is triggered when the processing equipment E receives a first N-user mode notification from a first mobile device D1, D2, D3 indicating that:
      - said first mobile device is motionless;
      - a position of said first mobile device determined by its position determining module 10;
      - an orientation (e.g. a direction with respect to the North, trim values such roll and pitch) of the first mobile device obtained by one of its sensors 8.
      The time period associated with the timer 15A may be set to zero when the first mobile device moves, preventing from activating a N-user mode with said mobile device;
   ▪ an orientation comparator 15B configured to determine the difference between the orientation of said first mobile device D1, D2, D3 (sending the first N-user mode notification) with the orientation of other mobile devices D1, D2, D3 which have also sent a N-user mode notification before the end of the time period of the timer 15A. The orientation comparator 15B is then configured to compare the determined difference of orientations with an orientation threshold (e.g. equal to some degrees for the direction). An orientation criterion is then met when said determined difference of orientation is equal or lower than the orientation threshold. It should be understood that, in case the orientation is formed by a combination of parameters (such as a direction, a roll value, a pitch value), the orientation comparator 15B may, for each parameter of the combination, determine a difference between values of the parameter of said first mobile device and other mobile devices and compare the determined difference with a corresponding threshold. In other words, a threshold is associated with each parameter of the combination defining the orientation, so that the orientation criterion is met when, for each parameter defining the orientation, the determined difference is equal or lower than the corresponding threshold;
   ▪ a position comparator 15C configured to determine the difference between the position of said first mobile device D1, D2, D3 (sending the first N-user mode notification) with the position of other mobile devices D1, D2, D3 which have also sent a N-user mode notification before the end of the time period of the timer 15A. The position comparator 15B is then configured to compare the determined difference of position with a position threshold. In a refinement, the position threshold may depend on the technology(ies) used to determine the position of the mobile device. A position criterion is met when said determined difference of position is equal or lower than the position threshold.

The processing equipment E may be a standalone equipment arranged within the network, or may be integrated, at least partially, within a further network equipment such as a gateway, a cache, a server, a proxy, etc.

In addition, in a variant, the whole processing equipment E, or a part of if, may be integrated within one of the mobile devices D1, D2, D3.

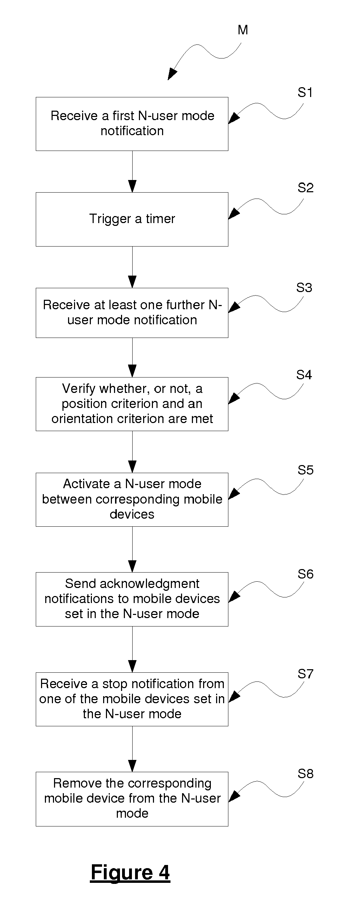

In order to operate the method for activating a multi-user mode illustrated in Figure 4:
- either a N-user mode application stored in at a mobile device D1, D2, D3 is launched upon, for instance, a user's action;
- or a N-user mode service is running as a backend task at the mobile device D1, D2, D3. In this case, the N-user mode service may be associated with a further application, the launch of said further application triggering the activation of the N-user mode service.

It is assumed that a network connection is already established between a mobile device D1, D2, D3 and the network equipment E operating the method M. In a variant, the connection might be established either upon the launch of a N-user mode application or when the N-user mode service is activated.

Thus, as shown in Figure 4, the method M for activating a multi-user mode, at a processing equipment E, between some mobile devices D1, D2, D3 comprises the following steps.

In a step S1, the processing equipment E receives, from a first mobile device (e.g. the mobile device D1 in Figure 1), a first N-user mode notification wherein it is indicated:
- that the first mobile device is motionless;
- a position of said first mobile device D1;
- an orientation of the first mobile device D1.

In a step S2, the processing equipment E triggers a timer 15A upon receipt of the first N-user mode notification from the first mobile device D1.

When a second N-user mode notification is received (step S3), by the processing equipment E, from a second mobile device (e.g. the mobile device D2 in Figure 1) before the end of the time period of the timer 15A, the processing equipment E determines, in a step S4:
- the difference between the orientation of the first mobile device D1 indicated in the first N-user mode notification with the orientation of the second mobile device D2 transmitted with the second N-user mode notification. The determined difference of orientation is then compared with an orientation threshold to verify whether, or not, an orientation criterion is met. When said determined difference of orientation is equal or lower than an orientation threshold, the orientation criterion is considered as met by the orientation comparator 15B of the processing equipment E;
- the difference between the position of the first mobile device D1 indicated in the first N-user mode notification with the position of the second mobile device D2 transmitted with the second N-user mode notification. The determined difference of position is then compared with a position threshold to verify whether, or not, a position criterion is met. When said determined difference of position is equal or lower than a position threshold, the position criterion is considered as met by the position comparator 15B of the processing equipment E.

It should be understood that step S4 is repeated each time a further N-user mode notification from a further mobile device (e.g. the mobile device D3) is received by the processing equipment E before the end of the time period of the timer 15A.

It has also to be noted that the position and orientation comparisons are performed with respect to the position and orientation of the mobile device sending the first N-user mode notification. Naturally, the comparisons may also be performed, in a variant, with respect to a further mobile device, distinct from the first mobile device, sending a N-user mode notification.

In a further step S5, the N-user module 15 of the processing equipment E activates a N-user mode between the mobile devices for which the orientation and position criteria are both met.

An N-user mode acknowledgment notification is further sent (step S6) to the mobile devices set in the N-user mode. Said notification may comprise an identifier of each mobile device for which the N-user mode is activated. Such an identifier (e.g. an IP address) may be provided by each mobile device to the processing equipment.

Once the N-user mode activated, a mobile device D1, D2, D3 may send a request to the processing equipment E for data or services. Such a request may comprise the identifiers of the other mobile devices sharing the N-user mode with the requesting mobile device.

When at least one criterion (the position criterion, the orientation criterion) is not met, the N-user mode is not activated between the corresponding mobile devices.

When the processing equipment E receives (step S7), from a mobile device set in the N-user mode, a stop notification indicating that said mobile device does want the activation of the N-user mode anymore, the corresponding mobile device is removed (step S8) from the N-user mode. Nevertheless, the N-user mode may be maintained between the other mobile devices, from which no stop notification has been received.

A notification may be sent by the processing equipment to inform the requesting mobile device that the mode N-user has been stopped.

It has to be noted that, in case a N-user mode notification is received, from a further mobile device, by the processing equipment after the end of the time period of the timer, the method M may be operating by considering said further mobile device as the first device and a new timer is triggered.

According to the embodiment, to be set in the N-user mode, no session code, password or the like is required, mobile devices are automatically associated with the N-user mode when the above mentioned conditions are fulfilled.

In an illustrating, but non limitative example, once the N-user mode is activated, the processing equipment E behaves as a broker. The N-user mode can be used:
- to obtain an extended display interface from the display interfaces of the mobile devices set in the N-user mode. In other words, the display interfaces of the mobile devices form one extended display interface, on which data - sent by the processing equipment - might be displayed. This is particularly advantageous when users of the mobile devices set in the N-user mode are located in the same place, such as in the same room, the mobile devices being arranged near to each other in the same table;
- to provide a recommendation (e.g. movie recommendation) based on profiles of users having their mobile devices set in the N-user mode, so that the recommendation relies on a plurality of user's profiles;
- to play an Audio/Video (A//V) content on a first mobile devices and to display additional information about said A/V content on other mobile devices, set in a multi-user mode with the first mobile device;
- etc.

Besides, the flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method for activating a multi-user mode, at a processing equipment (E) located in at least one network (N), between mobile devices (D1, D2, D3) arranged within said at least one network (N),
said method comprising, at the processing equipment (E):
- receiving (S1), from a first mobile device (D1, D2, D3) connected to the processing equipment (E), a first multi-user mode notification indicating that:
▪ the first mobile device (D1, D2, D3) is motionless;
▪ a position of the first mobile device (D1, D2, D3);
▪ an orientation of the first mobile device (D1, D2, D3);
- receiving (S3), from a further mobile device (D1, D2, D3) connected to the processing equipment (E), a further multi-user mode notification indicating that:
▪ the further mobile device (D1, D2, D3) is motionless;
▪ a position of the further mobile device (D1, D2, D3);
▪ an orientation of the further mobile device (D1, D2, D3);
- activating (S5) a multi-user mode, at the processing equipment (E), between at least the first and further mobile devices (D1, D2, D3) when:
▪ the positions of the first and further mobile devices (D1, D2, D3) meet a position criterion; and
▪ the orientations of the first and further mobile devices (D1, D2, D3) meet an orientation criterion.

2. The method according to claim 1, wherein the reception (S1) of the first multi-user mode notification triggers (S2) a timer at the processing equipment (E), so that the multi-user mode between the first and further mobile devices (D1, D2, D3) is activated when the further multi-user mode notification is received before the end of a time period associated with said timer (15A).

3. The method according to claim 1 or 2, wherein the position criterion is met when a difference between the position of the first mobile device (D1, D2, D3) with the position of the further mobile device (D1, D2, D3) is equal or lower than a position threshold.

4. The method according to any one of claims 1 to 3, wherein the orientation criterion is met when a difference between the orientation of the first mobile device (D1, D2, D3) with the orientation of the further mobile device (D1, D2, D3) is equal or lower than an orientation threshold.

5. The method according to any one of claims 1 to 4, comprising:
- sending (S6) of acknowledgment notifications to the first and further mobile devices (D1, D2, D3) once the multi-user mode is activated between said mobile devices.

6. The method according to claim 5, wherein the acknowledgment notifications comprise an identifier of each mobile device (D1, D2, D3) for which the multi-user mode is activated.

7. A processing equipment for activating a multi-user mode between mobile devices (D1, D2, D3) arranged within at least one network (N), said processing equipment (E) comprising:
- an interface of communication (11) configured to receive multi-user mode notifications from at least a first and a further mobile devices (D1, D2, D3) connected to the processing equipment (E), each multi-user mode notification indicating that:
▪ the corresponding mobile device (D1, D2, D3) is motionless;
▪ a position of the corresponding mobile device (D1, D2, D3);
▪ an orientation of the corresponding mobile device (D1, D2, D3);
- a multi-user mode module (15) configured to activate a multi-user mode between at least the first and further mobile devices (D1, D2, D3) when:
▪ the positions of the first and further mobile devices (D1, D2, D3) meet a position criterion;
▪ the orientations of the first and further mobile devices (D1, D2, D3) meet an orientation criterion.

8. The processing equipment according to claim 7, wherein the multi-user mode module further comprises a timer (15A) which is triggered upon receipt of a first multi-user mode notification from the first mobile device (D1, D2, D3),
so that the multi-user mode between the first and further mobile devices (D1, D2, D3) is activated when a further multi-user mode notification from said further mobile device (D1, D2, D3) is received before the end of a time period associated with the timer.

9. The processing equipment according to claim 7 or 8, wherein the multi-user module further comprises a position comparator (15C) configured to determine the difference between the position of the first mobile device (D1, D2, D3) with the position of the further mobile device (D1, D2, D3) and to compare the determined difference of positions with a position threshold,
so that the position criterion is met when the determined difference of positions is equal or lower than the position threshold.

10. The processing equipment according to any one of claims 7 to 9, wherein the multi-user module further comprises an orientation comparator (15B) configured to determine the difference between the orientation of the first mobile device (D1, D2, D3) with the orientation of the further mobile device (D1, D2, D3) and to compare the determined difference of orientations with an orientation threshold,
so that the orientation criterion is met when the determined difference of orientations is equal or lower than the orientation threshold.

11. The processing equipment according to any one of claims 7 to 10, wherein the multi-user module (15) is further configured to send acknowledgment notifications to the first and further mobile devices (D1, D2, D3) once the multi-user mode is activated between said mobile devices (D1, D2, D3).

12. The processing equipment according to claim 11, wherein the acknowledgment notifications comprise an identifier of each mobile device (D1, D2, D3) for which the multi-user mode is activated.

13. A processing equipment for activating a multi-user mode between mobile devices (D1, D2, D3) arranged within at least one network (N), said processing equipment (E) comprising one or several processors configured to:
- receive (S1), from a first mobile device (D1, D2, D3) connected to the processing equipment (E), a first multi-user mode notification indicating that:
▪ the first mobile device (D1, D2, D3) is motionless;
▪ a position of the first mobile device (D1, D2, D3);
▪ an orientation of the first mobile device (D1, D2, D3);
- receive (S3), from a further mobile device (D1, D2, D3) connected to the processing equipment (E), a further multi-user mode notification indicating that:
▪ the further mobile device (D1, D2, D3) is motionless;
▪ a position of the further mobile device (D1, D2, D3);
▪ an orientation of the further mobile device (D1, D2, D3);
- activate (S5) a multi-user mode between at least the first and further mobile devices (D1, D2, D3) when:
▪ the positions of the first and further mobile devices (D1, D2, D3) meet a position criterion; and
▪ the orientations of the first and further mobile devices (D1, D2, D3) meet an orientation criterion.

14. The processing equipment according to any one of claims 7 to 13, corresponds to one of the mobile devices (D1, D2, D3).

15. Computer program product downloadable from a communication network and/or recorded on a medium readable by computer and/or executable by a processor, comprising program code instructions for implementing a method for activating a multi-user mode, at a processing equipment (E) located in at least one network (N), between mobile devices (D1, D2, D3) arranged within said network (N), said method (M) comprising:
- receiving (S1), from a first mobile device (D1, D2, D3) connected to the processing equipment (E), a first multi-user mode notification indicating that:
▪ the first mobile device (D1, D2, D3) is motionless;
▪ a position of the first mobile device (D1, D2, D3);
▪ an orientation of the first mobile device (D1, D2, D3);
- receiving (S3), from a further mobile device (D1, D2, D3) connected to the processing equipment (E), a further multi-user mode notification indicating that:
▪ the further mobile device (D1, D2, D3) is motionless;
▪ a position of the further mobile device (D1, D2, D3);
▪ an orientation of the further mobile device (D1, D2, D3);
- activating (S5) a multi-user mode, at the processing equipment (E), between at least the first and further mobile devices (D1, D2, D3) when:
▪ the positions of the first and further mobile devices (D1, D2, D3) meet a position criterion; and
▪ the orientations of the first and further mobile devices (D1, D2, D3) meet an orientation criterion.
